(19) Europäisches Patentamt
European Patent Office
Office européen des brevets

(11) EP 2 906 627 B1

(12) **EUROPEAN PATENT SPECIFICATION**

(45) Date of publication and mention of the grant of the patent:
**21.06.2017 Bulletin 2017/25**

(21) Application number: **13776667.1**

(22) Date of filing: **01.10.2013**

(51) Int Cl.:
***C08L 23/08*** *(2006.01)*

(86) International application number:
**PCT/US2013/062826**

(87) International publication number:
**WO 2014/058660 (17.04.2014 Gazette 2014/16)**

(54) **SEALANT COMPOSITION**

DICHTUNGSMITTELZUSAMMENSETZUNG

COMPOSITION DE PRODUIT D'ÉTANCHÉITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2012 US 201261713136 P**

(43) Date of publication of application:
**19.08.2015 Bulletin 2015/34**

(73) Proprietor: **Dow Global Technologies LLC**
**Midland, MI 48674 (US)**

(72) Inventors:
- **KAPUR, Mridula**
  **Lake Jackson, TX 77566 (US)**
- **WANG, Jian**
  **Rosharon, TX 77583 (US)**
- **SAINI, Gagan**
  **Houston, TX 77030 (US)**
- **BILGEN, Mustafa**
  **Manvel, TX 77578 (US)**
- **TAMBLING, Troy M.**
  **Midland, Michigan 48642 (US)**
- **REIB, Robert N.**
  **Hurricane, WV 25526 (US)**

(74) Representative: **Boult Wade Tennant**
**Verulam Gardens**
**70 Gray's Inn Road**
**London WC1X 8BT (GB)**

(56) References cited:
**WO-A1-2010/144784 US-A1- 2009 192 270**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 906 627 B1

## Description

### Field of Invention

The instant invention relates to a sealant composition, method of producing the same, film layers and multilayer structures made therefrom.

### Background of the Invention

The use of polyethylene compositions in sealant applications is generally known. Any conventional method, such as gas phase process, slurry process, solution process or high pressure process, may be employed to produce such polyethylene compositions.

Various polymerization techniques using different catalyst systems have been employed to produce such polyethylene compositions suitable for sealant applications.

Despite the research efforts in developing sealant compositions, there is still a need for a sealant composition having a lower heat seal and hot tack initiation temperatures while providing increased hot tack and hot seal strength.

### Summary of the Invention

The instant invention provides a sealant composition, method of producing the same, film layers and multilayer structures made therefrom.

In one embodiment, the instant invention provides a linear low density polyethylene composition suitable for sealant applications comprising: less than or equal to 100 percent by weight of the units derived from ethylene; less than 35 percent by weight of units derived from one or more $\alpha$-olefin comonomers; wherein said linear low density polyethylene composition has a density in the range of 0.900 to 0.920 g/cm$^3$, a molecular weight distribution ($M_w/M_n$) in the range of 2.5 to 4.5, a melt index ($I_2$) in the range of 0.5 to 1.8g/10 minutes, a molecular weight distribution ($M_z/M_w$) in the range of from 2.2 to 3, vinyl unsaturation of less than 0.1 vinyls per one thousand carbon atoms present in the backbone of said composition, and a zero shear viscosity ratio (ZSVR) in the range from 1.0 to 1.2.

In one embodiment, the instant invention provides sealant composition comprising: (a) a linear low density polyethylene composition suitable for sealant applications comprising less than or equal to 100 percent by weight of the units derived from ethylene, and less than 35 percent by weight of units derived from one or more $\alpha$-olefin comonomers; wherein said linear low density polyethylene composition has a density in the range of 0.900 to 0.920 g/cm$^3$, a molecular weight distribution ($M_w/M_n$) in the range of 2.5 to 4.5, a melt index ($I_2$) in the range of 0.5 to 1.8g/10 minutes, a molecular weight distribution ($M_z/M_w$) in the range of from 2.2 to 3, vinyl unsaturation of less than 0.1 vinyls per one thousand carbon atoms present in the backbone of said composition, and a zero shear viscosity ratio (ZSVR) in the range from 1.0 to 1.2; and (b) from less than 30 percent by weight of a low density polyethylene composition having a has a density in the range of 0.915 to 0.930 g/cm$^3$, a melt index ($I_2$) in the range of 0.1 to 5 g/10 minutes, and a molecular weight distribution ($M_w/M_n$) in the range of 6 to 10.

In an alternative embodiment, the instant invention further provides a film layer comprising the sealant composition, as described above.

In an alternative embodiment, the instant invention further provides a film layer comprising the linear low density polyethylene composition, as described above.

In an alternative embodiment, the instant invention further provides a multilayer structure comprising a film layer comprising the sealant composition, as described above.

In an alternative embodiment, the instant invention further provides a multilayer structure comprising a film layer comprising the linear low density polyethylene composition, as described above.

### Brief Description of the Drawings

For the purpose of illustrating the invention, there is shown in the drawings a form that is exemplary; it being understood, however, that this invention is not limited to the precise arrangements and instrumentalities shown.

> **Fig. 1** reports the $^{13}$C NMR results for a low density polyethylene present in an inventive polyolefin blend composition; and
>
> **Fig. 2** is a graph illustrating the relationship between hot tack strength and test temperature of inventive three-layer films 1-3 and comparative three-layer films A-C.

## Detailed Description of the Invention

The instant invention provides a sealant composition, method of producing the same, film layers and multilayer structures made therefrom.

In one embodiment, the instant invention provides a linear low density polyethylene composition suitable for sealant applications comprising: less than or equal to 100 percent by weight of the units derived from ethylene; less than 35 percent by weight of units derived from one or more $\alpha$-olefin comonomers; wherein said linear low density polyethylene composition has a density in the range of 0.900 to 0.920 g/cm$^3$, a molecular weight distribution ($M_w/M_n$) in the range of 2.5 to 4.5, a melt index ($I_2$) in the range of 0.5 to 1.8g/10 minutes, a molecular weight distribution ($M_z/M_w$) in the range of from 2.2 to 3, vinyl unsaturation of less than 0.1 vinyls per one thousand carbon atoms present in the backbone of said composition, and a zero shear viscosity ratio (ZSVR) in the range from 1.0 to 1.2.

In one embodiment, the instant invention provides sealant composition comprising: (a) a linear low density polyethylene composition suitable for sealant applications comprising less than or equal to 100 percent by weight of the units derived from ethylene, and less than 35 percent by weight of units derived from one or more $\alpha$-olefin comonomers; wherein said linear low density polyethylene composition has a density in the range of 0.900 to 0.920 g/cm$^3$, a molecular weight distribution ($M_w/M_n$) in the range of 2.5 to 4.5, a melt index ($I_2$) in the range of 0.5 to 1.8g/10 minutes, a molecular weight distribution ($M_z/M_w$) in the range in the range of from 2.2 to 3, vinyl unsaturation of less than 0.1 vinyls per one thousand carbon atoms present in the backbone of said composition, and a zero shear viscosity ratio (ZSVR) in the range from 1.0 to 1.2; and (b) from less than 30 percent by weight of a low density polyethylene composition having a has a density in the range of 0.915 to 0.930 g/cm$^3$, a melt index ($I_2$) in the range of 0.1 to 5 g/10 minutes, and a molecular weight distribution ($M_w/M_n$) in the range of 6 to 10.

## Linear Low Density Polyethylene Composition

The linear low density polyethylene composition is substantially free of any long chain branching, and preferably, the linear low density polyethylene composition is free of any long chain branching. Substantially free of any long chain branching, as used herein, refers to a linear low density polyethylene composition preferably substituted with less than 0.1 long chain branching per 1000 total carbons, and more preferably, less than 0.01 long chain branching per 1000 total carbons.

The term (co)polymerization, as used herein, refers to the polymerization of ethylene and optionally one or more comonomers, e.g. one or more $\alpha$-olefin comonomers. Thus, the term (co)polymerization refers to both polymerization of ethylene and copolymerization of ethylene and one or more comonomers, e.g. one or more $\alpha$-olefin comonomers.

The linear low density polyethylene composition suitable for blown film according to the present invention (LLDPE) comprises (a) less than or equal to 100 percent, for example, at least 65 percent, at least 70 percent, or at least 80 percent, or at least 90 percent, by weight of the units derived from ethylene; and (b) less than 35 percent, for example, less than 25 percent, or less than 20 percent, by weight of units derived from one or more $\alpha$-olefin comonomers.

The linear low density polyethylene composition according to instant invention has a density in the range of from 0.900 to 0.920. All individual values and subranges from 0.900 to 0.920 g/cm$^3$ are included herein and disclosed herein; for example, the density can be from a lower limit of 0.900, 0.905, 0.908, or 0.910 g/cm$^3$ to an upper limit of 0.914, 0.918, 0.919, or 0.920 g/cm$^3$.

The linear low density polyethylene composition according to instant invention is characterized by having a zero shear viscosity ratio (ZSVR) in the range from 1 to 1.2.

The linear low density polyethylene composition according to the instant invention has a molecular weight distribution ($M_w/M_n$) (measured according to the conventional gel permeation chromatography (GPC) method) in the range of 2.5 to 4.5. All individual values and subranges from 2.5 to 4.5 are included herein and disclosed herein; for example, the molecular weight distribution ($M_w/M_n$) can be from a lower limit of 2.5, 2.7, 2.9, 3.0 to an upper limit of 3.6, 3.8, 3.9, 4.2, 4.4, or 4.5.

The linear low density polyethylene composition according to the instant invention has a melt index ($I_2$) in the range of from 0.5 to 1.8 g/10 minutes. All individual values and subranges from 0.5 to 1.8 g/10 minutes are included herein and disclosed herein; for example, the melt index ($I_2$) can be from a lower limit of 0.5, 0.6, or 0.7 g/10 minutes to an upper limit of 1.2, 1.5 or 1.8g/10 minutes.

The linear low density polyethylene composition according to the instant invention has a molecular weight ($M_w$) in the range of 50,000 to 250,000 daltons. All individual values and subranges from 50,000 to 250,000 daltons are included herein and disclosed herein; for example, the molecular weight ($M_w$) can be from a lower limit of 50,000, 60,000, 70,000 daltons to an upper limit of 150,000, 180,000, 200,000 or 250,000 daltons.

The linear low density polyethylene composition may have molecular weight distribution ($M_z/M_w$) (measured according to the conventional GPC method) in the range of from 2.2 to 3. All individual values and subranges from 2.2 to 3 are included herein and disclosed herein.

The linear low density polyethylene composition may have a vinyl unsaturation of less than 0.1 vinyls per one thousand carbon atoms present in the linear low density polyethylene composition. All individual values and subranges from less than 0.1 are included herein and disclosed herein; for example, the linear low density polyethylene composition may have a vinyl unsaturation of less than 0.08 vinyls per one thousand carbon atoms present in the linear low density polyethylene composition.

The linear low density polyethylene composition may comprise less than 35 percent by weight of units derived from one or more α-olefin comonomers. All individual values and subranges from less than 35 weight percent are included herein and disclosed herein; for example, the linear low density polyethylene composition may comprise less than 25 percent by weight of units derived from one or more α-olefin comonomers; or in the alternative, the linear low density polyethylene composition may comprise less than 15 percent by weight of units derived from one or more α-olefin comonomers; or in the alternative, the linear low density polyethylene composition may comprise less than 14 percent by weight of units derived from one or more α-olefin comonomers.

The α-olefin comonomers typically have no more than 20 carbon atoms. For example, the α-olefin comonomers may preferably have 3 to 10 carbon atoms, and more preferably 3 to 8 carbon atoms. Exemplary α-olefin comonomers include, but are not limited to, propylene, 1-butene, 1-pentene, 1-hexene, 1-heptene, 1-octene, 1-nonene, 1-decene, and 4-methyl-1-pentene. The one or more α-olefin comonomers may, for example, be selected from the group consisting of propylene, 1-butene, 1-hexene, and 1-octene; or in the alternative, from the group consisting of 1-hexene and 1-octene.

The linear low density polyethylene composition may comprise at least 65 percent by weight of units derived from ethylene. All individual values and subranges from at least 75 weight percent are included herein and disclosed herein; for example, the linear low density polyethylene composition may comprise at least 85 percent by weight of units derived from ethylene; or in the alternative, the linear low density polyethylene composition may comprise less than 100 percent by weight of units derived from ethylene.

The linear low density polyethylene composition may further comprise less than or equal to 100 parts by weight of hafnium residues remaining from the hafnium based metallocene catalyst per one million parts of linear low density polyethylene composition. All individual values and subranges from less than or equal to 100 ppm are included herein and disclosed herein; for example, the linear low density polyethylene composition may further comprise less than or equal to 10 parts by weight of hafnium residues remaining from the hafnium based metallocene catalyst per one million parts of linear low density polyethylene composition; or in the alternative, the linear low density polyethylene composition may further comprise less than or equal to 8 parts by weight of hafnium residues remaining from the hafnium based metallocene catalyst per one million parts of linear low density polyethylene composition; or in the alternative, the linear low density polyethylene composition may further comprise less than or equal to 6 parts by weight of hafnium residues remaining from the hafnium based metallocene catalyst per one million parts of linear low density polyethylene composition; or in the alternative, the linear low density polyethylene composition may further comprise less than or equal to 4 parts by weight of hafnium residues remaining from the hafnium based metallocene catalyst per one million parts of linear low density polyethylene composition; or in the alternative, the linear low density polyethylene composition may further comprise less than or equal to 2 parts by weight of hafnium residues remaining from the hafnium based metallocene catalyst per one million parts of linear low density polyethylene composition; or in the alternative, the linear low density polyethylene composition may further comprise less than or equal to 1.5 parts by weight of hafnium residues remaining from the hafnium based metallocene catalyst per one million parts of linear low density polyethylene composition; or in the alternative, the linear low density polyethylene composition may further comprise less than or equal to 1 parts by weight of hafnium residues remaining from the hafnium based metallocene catalyst per one million parts of linear low density polyethylene composition; or in the alternative, the linear low density polyethylene composition may further comprise less than or equal to 0.75 parts by weight of hafnium residues remaining from the hafnium based metallocene catalyst per one million parts of linear low density polyethylene composition; or in the alternative, the linear low density polyethylene composition may further comprise less than or equal to 0.5 parts by weight of hafnium residues remaining from the hafnium based metallocene catalyst per one million parts of linear low density polyethylene composition the linear low density polyethylene composition may further comprise less than or equal to 0.25 parts by weight of hafnium residues remaining from the hafnium based metallocene catalyst per one million parts of linear low density polyethylene composition. The hafnium residues remaining from the hafnium based metallocene catalyst in the linear low density polyethylene composition may be measured by x-ray fluorescence (XRF), which is calibrated to reference standards. The polymer resin granules were compression molded at elevated temperature into plaques having a thickness of about 0.95 cm (3/8 of an inch) for the x-ray measurement in a preferred method. At very low concentrations of metal, such as below 0.1 ppm, ICP-AES would be a suitable method to determine metal residues present in the linear low density polyethylene composition. In one embodiment, the linear low density polyethylene composition has substantially no chromium, zirconium or titanium content, that is, no or only what would be considered by those skilled in the art, trace amounts of these metals are present, such as, for example, less than 0.001 ppm.

The linear low density polyethylene composition may further comprise additional additives. Such additives include, but are not limited to, one or more hydrotalcite based neutralizing agents, antistatic agents, color enhancers,

dyes, lubricants, fillers, pigments, primary antioxidants, secondary antioxidants, processing aids, UV stabilizers, nucleators, and combinations thereof. The inventive polyethylene composition may contain any amounts of additives. The linear low density polyethylene composition may comprise from 0 to 10 percent by the combined weight of such additives, based on the weight of the linear low density polyethylene composition including such additives. All individual values and subranges from 0 to 10 weight percent are included herein and disclosed herein; for example, the linear low density polyethylene composition may comprise from 0 to 7 percent by the combined weight of additives, based on the weight of the linear low density polyethylene composition including such additives; in the alternative, the linear low density polyethylene composition may comprise from 0 to 5 percent by the combined weight of additives, based on the weight of the linear low density polyethylene composition including such additives; or in the alternative, the linear low density polyethylene composition may comprise from 0 to 3 percent by the combined weight of additives, based on the weight of the linear low density polyethylene composition including such additives; or in the alternative, the linear low density polyethylene composition may comprise from 0 to 2 percent by the combined weight of additives, based on the weight of the linear low density polyethylene composition including such additives; or in the alternative, the linear low density polyethylene composition may comprise from 0 to 1 percent by the combined weight of additives, based on the weight of the linear low density polyethylene composition including such additives; or in the alternative, the linear low density polyethylene composition may comprise from 0 to 0.5 percent by the combined weight of additives, based on the weight of the linear low density polyethylene composition including such additives.

Any conventional ethylene (co)polymerization reaction may be employed to produce such linear low density polyethylene compositions. Such conventional ethylene (co)polymerization reactions include, but are not limited to, gas phase polymerization process, slurry phase polymerization process, solution phase polymerization process, and combinations thereof using one or more conventional reactors, e.g. fluidized bed gas phase reactors, loop reactors, stirred tank reactors, batch reactors in parallel, series, and/or any combinations thereof. For example, the linear low density polyethylene composition may be produced via gas phase polymerization process in a single gas phase reactor; however, the production of such linear low density polyethylene compositions is not so limited to gas phase polymerization process, and any of the above polymerization processes may be employed. In one embodiment, the polymerization reactor may comprise of two or more reactors in series, parallel, or combinations thereof. Preferably, the polymerization reactor is one reactor, e.g. a fluidized bed gas phase reactor. In another embodiment, the gas phase polymerization reactor is a continuous polymerization reactor comprising one or more feed streams. In the polymerization reactor, the one or more feed streams are combined together, and the gas comprising ethylene and optionally one or more comonomers, e.g. one or more $\alpha$-olefins, are flowed or cycled continuously through the polymerization reactor by any suitable means. The gas comprising ethylene and optionally one or more comonomers, e.g. one or more $\alpha$-olefins, may be fed up through a distributor plate to fluidize the bed in a continuous fluidization process.

In production, a hafnium based metallocene catalyst system including a cocatalyst, as described hereinbelow in further details, ethylene, optionally one or more alpha-olefin comonomers, hydrogen, optionally one or more inert gases and/or liquids, e.g. $N_2$, isopentane, and hexane, and optionally one or more continuity additive, e.g. ethoxylated stearyl amine or aluminum distearate or combinations thereof, are continuously fed into a reactor, e.g. a fluidized bed gas phase reactor. The reactor may be in fluid communication with one or more discharge tanks, surge tanks, purge tanks, and/or recycle compressors. The temperature in the reactor is typically in the range of 70 to 115 °C., preferably 75 to 110 °C., more preferably 75 to 100 °C., and the pressure is in the range of 1.5 to 3.0 MPa (15 to 30 atm), preferably 1.7 to 2.6 MPa (17 to 26 atm). A distributor plate at the bottom of the polymer bed provides a uniform flow of the upflowing monomer, comonomer, and inert gases stream. A mechanical agitator may also be provided to provide contact between the solid particles and the comonomer gas stream. The fluidized bed, a vertical cylindrical reactor, may have a bulb shape at the top to facilitate the reduction of gas velocity; thus, permitting the granular polymer to separate from the upflowing gases. The unreacted gases are then cooled to remove the heat of polymerization, recompressed, and then recycled to the bottom of the reactor. Once the residual hydrocarbons are removed, and the resin is transported under $N_2$ to a purge bin, moisture may be introduced to reduce the presence of any residual catalyzed reactions with $O_2$ before the linear low density polyethylene composition is exposed to oxygen. The linear low density polyethylene composition may then be transferred to an extruder to be pelletized. Such pelletization techniques are generally known. The linear low density polyethylene composition may further be melt screened. Subsequent to the melting process in the extruder, the molten composition is passed through one or more active screens, positioned in series of more than one, with each active screen having a micron retention size of from 2$\mu$m to 400$\mu$m (2 to 4 X $10^{-5}$ m), and preferably 2$\mu$m to 300$\mu$m (2 to 3 X $10^{-5}$ m), and most preferably 2$\mu$m to 70$\mu$m (2 to 7 X $10^{-6}$ m), at a mass flux of 1.0 to 20 kg/s/$m^2$ (5 to 100 lb/hr/$in^2$). Such further melt screening is disclosed in U.S. Patent No. 6,485,662.

In an embodiment of a fluidized bed reactor, a monomer stream is passed to a polymerization section. The fluidized bed reactor may include a reaction zone in fluid communication with a velocity reduction zone. The reaction zone includes a bed of growing polymer particles, formed polymer particles and catalyst composition particles fluidized by the continuous flow of polymerizable and modifying gaseous components in the form of make-up feed and recycle fluid through the reaction zone. Preferably, the make-up feed includes polymerizable monomer, most preferably ethylene

and optionally one or more α-olefin comonomers, and may also include condensing agents as is known in the art and disclosed in, for example, U.S. Pat. No. 4,543,399, U.S. Pat. No. 5,405,922, and U.S. Pat. No. 5,462,999.

The fluidized bed has the general appearance of a dense mass of individually moving particles, preferably polyethylene particles, as generated by the percolation of gas through the bed. The pressure drop through the bed is equal to or slightly greater than the weight of the bed divided by the cross-sectional area. It is thus dependent on the geometry of the reactor. To maintain a viable fluidized bed in the reaction zone, the superficial gas velocity through the bed must exceed the minimum flow required for fluidization. Preferably, the superficial gas velocity is at least two times the minimum flow velocity. Ordinarily, the superficial gas velocity does not exceed 1.5 m/sec and usually no more than 0.23 m/sec (0.76 ft/sec) is sufficient.

In general, the height to diameter ratio of the reaction zone can vary in the range of 2:1 to 5:1. The range, of course, can vary to larger or smaller ratios and depends upon the desired production capacity. The cross-sectional area of the velocity reduction zone is typically within the range of 2 to 3 multiplied by the cross-sectional area of the reaction zone.

The velocity reduction zone has a larger inner diameter than the reaction zone, and can be conically tapered in shape. As the name suggests, the velocity reduction zone slows the velocity of the gas due to the increased cross sectional area. This reduction in gas velocity drops the entrained particles into the bed, reducing the quantity of entrained particles that flow from the reactor. The gas exiting the overhead of the reactor is the recycle gas stream.

The recycle stream is compressed in a compressor and then passed through a heat exchange zone where heat is removed before the stream is returned to the bed. The heat exchange zone is typically a heat exchanger, which can be of the horizontal or vertical type. If desired, several heat exchangers can be employed to lower the temperature of the cycle gas stream in stages. It is also possible to locate the compressor downstream from the heat exchanger or at an intermediate point between several heat exchangers. After cooling, the recycle stream is returned to the reactor through a recycle inlet line. The cooled recycle stream absorbs the heat of reaction generated by the polymerization reaction.

Preferably, the recycle stream is returned to the reactor and to the fluidized bed through a gas distributor plate. A gas deflector is preferably installed at the inlet to the reactor to prevent contained polymer particles from settling out and agglomerating into a solid mass and to prevent liquid accumulation at the bottom of the reactor as well to facilitate easy transitions between processes that contain liquid in the cycle gas stream and those that do not and vice versa. Such deflectors are described in the U.S. Pat. No. 4,933,149 and U.S. Pat. No. 6,627,713.

The hafnium based catalyst system used in the fluidized bed is preferably stored for service in a reservoir under a blanket of a gas, which is inert to the stored material, such as nitrogen or argon. The hafnium based catalyst system may be added to the reaction system, or reactor, at any point and by any suitable means, and is preferably added to the reaction system either directly into the fluidized bed or downstream of the last heat exchanger, i.e. the exchanger farthest downstream relative to the flow, in the recycle line, in which case the activator is fed into the bed or recycle line from a dispenser. The hafnium based catalyst system is injected into the bed at a point above distributor plate. Preferably, the hafnium based catalyst system is injected at a point in the bed where good mixing with polymer particles occurs. Injecting the hafnium based catalyst system at a point above the distribution plate facilitates the operation of a fluidized bed polymerization reactor.

The monomers can be introduced into the polymerization zone in various ways including, but not limited to, direct injection through a nozzle into the bed or cycle gas line. The monomers can also be sprayed onto the top of the bed through a nozzle positioned above the bed, which may aid in eliminating some carryover of fines by the cycle gas stream.

Make-up fluid may be fed to the bed through a separate line to the reactor. The composition of the make-up stream is determined by a gas analyzer. The gas analyzer determines the composition of the recycle stream, and the composition of the make-up stream is adjusted accordingly to maintain an essentially steady state gaseous composition within the reaction zone. The gas analyzer can be a conventional gas analyzer that determines the recycle stream composition to maintain the ratios of feed stream components. Such equipment is commercially available from a wide variety of sources. The gas analyzer is typically positioned to receive gas from a sampling point located between the velocity reduction zone and heat exchanger.

The production rate of linear low density polyethylene composition may be conveniently controlled by adjusting the rate of catalyst composition injection, activator injection, or both. Since any change in the rate of catalyst composition injection will change the reaction rate and thus the rate at which heat is generated in the bed, the temperature of the recycle stream entering the reactor is adjusted to accommodate any change in the rate of heat generation. This ensures the maintenance of an essentially constant temperature in the bed. Complete instrumentation of both the fluidized bed and the recycle stream cooling system is, of course, useful to detect any temperature change in the bed so as to enable either the operator or a conventional automatic control system to make a suitable adjustment in the temperature of the recycle stream.

Under a given set of operating conditions, the fluidized bed is maintained at essentially a constant height by withdrawing a portion of the bed as product at the rate of formation of the particulate polymer product. Since the rate of

heat generation is directly related to the rate of product formation, a measurement of the temperature rise of the fluid across the reactor, i.e. the difference between inlet fluid temperature and exit fluid temperature, is indicative of the rate of linear low density polyethylene composition formation at a constant fluid velocity if no or negligible vaporizable liquid is present in the inlet fluid.

On discharge of particulate polymer product from reactor, it is desirable and preferable to separate fluid from the product and to return the fluid to the recycle line. There are numerous ways known to the art to accomplish this separation. Product discharge systems which may be alternatively employed are disclosed and claimed in U.S. Pat. No. 4,621,952. Such a system typically employs at least one (parallel) pair of tanks comprising a settling tank and a transfer tank arranged in series and having the separated gas phase returned from the top of the settling tank to a point in the reactor near the top of the fluidized bed.

In the fluidized bed gas phase reactor embodiment, the reactor temperature of the fluidized bed process herein ranges from 70 °C., or 75 °C., or 80 °C. to 90 °C., or 95 °C., or 100 °C., or 110 °C., or 115 °C. , wherein a desirable temperature range comprises any upper temperature limit combined with any lower temperature limit described herein. In general, the reactor temperature is operated at the highest temperature that is feasible, taking into account the sintering temperature of the inventive polyethylene composition within the reactor and fouling that may occur in the reactor or recycle line(s).

The above process is suitable for the production of homopolymers comprising ethylene derived units, or copolymers comprising ethylene derived units and at least one or more other α-olefin(s) derived units.

In order to maintain an adequate catalyst productivity in the present invention, it is preferable that the ethylene is present in the reactor at a partial pressure at or greater than 1100 kPa (160 psia), or 1300 kPa (190 psia), or 1380 kPa (200 psia), or 1450 kPa (210 psia), or 1515 kPa (220 psia).

The comonomer, e.g. one or more α-olefin comonomers, if present in the polymerization reactor, is present at any level that will achieve the desired weight percent incorporation of the comonomer into the finished polyethylene. This is expressed as a mole ratio of comonomer to ethylene as described herein, which is the ratio of the gas concentration of comonomer moles in the cycle gas to the gas concentration of ethylene moles in the cycle gas. In one embodiment of the inventive polyethylene composition production, the comonomer is present with ethylene in the cycle gas in a mole ratio range of from 0 to 0.1 (comonomer:ethylene); and from 0 to 0.05 in another embodiment; and from 0 to 0.04 in another embodiment; and from 0 to 0.03 in another embodiment; and from 0 to 0.02 in another embodiment.

Hydrogen gas may also be added to the polymerization reactor(s) to control the final properties (e.g., $I_{21}$ and/or $I_2$) of the inventive linear low density polyethylene composition. In one embodiment, the ratio of hydrogen to total ethylene monomer (ppm $H_2$ / mol % $C_2$) in the circulating gas stream is in a range of from 0 to 60:1 in one embodiment; from 0.10:1 (0.10) to 50:1 (50) in another embodiment; from 0 to 35:1 (35) in another embodiment; from 0 to 25:1 (25) in another embodiment; from 7:1 (7) to 22:1 (22).

In one embodiment, the process for producing a linear low density polyethylene composition comprises the steps of: (1) (co)polymerizing ethylene and optionally one or more α-olefin comonomer in the presence of a hafnium based metallocene catalyst via a gas phase (co)polymerization process in a single stage reactor; and (2) thereby producing the linear low density polyethylene composition.

The hafnium based catalyst system, as used herein, refers to a catalyst capable of catalyzing the polymerization of ethylene monomers and optionally one or more α-olefin co monomers to produce polyethylene. Furthermore, the hafnium based catalyst system comprises a hafnocene component. The hafnocene component may comprise mono-, bis- or tris- cyclopentadienyl-type complexes of hafnium. In one embodiment, the cyclopentadienyl-type ligand comprises cyclopentadienyl or ligands isolobal to cyclopentadienyl and substituted versions thereof. Representative examples of ligands isolobal to cyclopentadienyl include, but are not limited to, cyclopentaphenanthreneyl, indenyl, benzindenyl, fluorenyl, octahydrofluorenyl, cyclooctatetraenyl, cyclopentacyclododecene, phenanthrindenyl, 3,4-benzofluorenyl, 9-phenylfluorenyl, 8-H-cyclopent[a]acenaphthylenyl, 7H-dibenzofluorenyl, indeno[1,2-9]anthrene, thiophenoindenyl, thiophenofluorenyl, hydrogenated versions thereof (e.g., 4,5,6,7-tetrahydroindenyl, or "$H_4$Ind") and substituted versions thereof. In one embodiment, the hafnocene component is an unbridged bis-cyclopentadienyl hafnocene and substituted versions thereof. In another embodiment, the hafnocene component excludes unsubstituted bridged and unbridged bis-cyclopentadienyl hafnocenes, and unsubstituted bridged and unbridged bis-indenyl hafnocenes. The term "unsubstituted," as used herein, means that there are only hydride groups bound to the rings and no other group. Preferably, the hafnocene useful in the present invention can be represented by the formula (where "Hf" is hafnium):

$$Cp_nHfX_p \qquad (1)$$

wherein n is 1 or 2, p is 1, 2 or 3, each Cp is independently a cyclopentadienyl ligand or a ligand isolobal to cyclopentadienyl or a substituted version thereof bound to the hafnium; and X is selected from the group consisting of hydride, halides, $C_1$ to $C_{10}$ alkyls and $C_2$ to $C_{12}$ alkenyls; and wherein when n is 2, each Cp may be bound to one another through a bridging group A selected from the group consisting of $C_1$ to $C_5$ alkylenes, oxygen, alkylamine, silyl-hydrocarbons, and

siloxyl-hydrocarbons. An example of $C_1$ to $C_5$ alkylenes include ethylene (--$CH_2CH_2$--) bridge groups; an example of an alkylamine bridging group includes methylamide (--($CH_3$)N--); an example of a silyl-hydrocarbon bridging group includes dimethylsilyl (--$(CH_3)_2$Si--); and an example of a siloxyl-hydrocarbon bridging group includes (--O--$(CH_3)_2$Si--O--). In one particular embodiment, the hafnocene component is represented by formula (1), wherein n is 2 and p is 1 or 2.

As used herein, the term "substituted" means that the referenced group possesses at least one moiety in place of one or more hydrogens in any position, the moieties selected from such groups as halogen radicals such as F, Cl, Br., hydroxyl groups, carbonyl groups, carboxyl groups, amine groups, phosphine groups, alkoxy groups, phenyl groups, naphthyl groups, $C_1$ to $C_{10}$ alkyl groups, $C_2$ to $C_{10}$ alkenyl groups, and combinations thereof. Examples of substituted alkyls and aryls includes, but are not limited to, acyl radicals, alkylamino radicals, alkoxy radicals, aryloxy radicals, alkylthio radicals, dialkylamino radicals, alkoxycarbonyl radicals, aryloxycarbonyl radicals, carbamoyl radicals, alkyl- and dialkyl-carbamoyl radicals, acyloxy radicals, acylamino radicals, arylamino radicals, and combinations thereof. More preferably, the hafnocene component useful in the present invention can be represented by the formula:

$$(CpR_5)_2HfX_2 \qquad (2)$$

wherein each Cp is a cyclopentadienyl ligand and each is bound to the hafnium; each R is independently selected from hydrides and $C_1$ to $C_{10}$ alkyls, most preferably hydrides and $C_1$ to $C_5$ alkyls; and X is selected from the group consisting of hydride, halide, $C_1$ to $C_{10}$ alkyls and $C_2$ to $C_{12}$ alkenyls, and more preferably X is selected from the group consisting of halides, $C_2$ to $C_6$ alkylenes and $C_1$ to $C_6$ alkyls, and most preferably X is selected from the group consisting of chloride, fluoride, $C_1$ to $C_5$ alkyls and $C_2$ to $C_6$ alkylenes. In a most preferred embodiment, the hafnocene is represented by formula (2) above, wherein at least one R group is an alkyl as defined above, preferably a $C_1$ to $C_5$ alkyl, and the others are hydrides. In a most preferred embodiment, each Cp is independently substituted with from one two three groups selected from the group consisting of methyl, ethyl, propyl, butyl, and isomers thereof.

In one embodiment, the hafnocene based catalyst system is heterogeneous, i.e. the hafnocene based catalyst may further comprise a support material. The support material can be any material known in the art for supporting catalyst compositions; for example an inorganic oxide; or in the alternative, silica, alumina, silica-alumina, magnesium chloride, graphite, magnesia, titania, zirconia, and montmorillonite, any of which can be chemically/physically modified such as by fluoriding processes, calcining or other processes known in the art. In one embodiment the support material is a silica material having an average particle size as determined by Malvern analysis of from 1 to 60 mm; or in the alternative, 10 to 40 mm.

The hafnium based catalyst system may further comprise an activator. Any suitable activator known to activate catalyst components towards olefin polymerization may be suitable. In one embodiment, the activator is an alumoxane; in the alternative methalumoxane such as described by J. B. P. Soares and A. E. Hamielec in 3(2) POLYMER REACTION ENGINEERING 131 200 (1995). The alumoxane may preferably be co-supported on the support material in a molar ratio of aluminum to hafnium (Al:Hf) ranging from 80:1 to 200:1, most preferably 90:1 to 140:1.

Such hafnium based catalyst systems are further described in details in the U.S. Patent No. 6,242,545 and U.S. Patent No. 7,078,467.

## Low Density Polyethylene Composition Component

The sealant composition suitable for film applications according to the present invention comprises from less than 30 percent by weight of a low density polyethylene (LDPE); for example, from 15 to 25 weight percent; or in the alternative, from 18 to 22 weight percent. The low density polyethylene has a density in the range of from 0.915 to 0.930 g/cm$^3$; for example, from 0.915 to 0.925 g/cm$^3$; or in the alternative, from 0.918 to 0.922 g/cm$^3$. The low density polyethylene has a melt index ($I_2$) in the range of from 0.1 to 5 g/10 minutes; for example, from 0.5 to 3 g/10 minutes; or in the alternative, from 1.5 to 2.5 g/10 minutes. The low density polyethylene has a molecular weight distribution ($M_w/M_n$) in the range of from 6 to 10; for example, from 6 to 9.5; or in the alternative, from 6 to 9; or in the alternative, from 6 to 8.5; or in the alternative, from 7.5 to 9. Such low density polyethylene compositions are commercially available, for example, from The Dow Chemical Company.

The LDPE component has a long chin branching of at least 2 per 1000 carbon and /or up to 4 per 1000 carbon. The LDPE component has a peak at 32.7 ppm measured via $^{13}C$ NMR indicating the presence of the $C_3$ carbon of a $C_5$ or amyl branch in the LDPE component. If LDPE is present, the sealant composition may be prepared via any conventional melt blending process such as extrusion via an extruder, e.g. single or twin screw extruder. The LDPE, LLDPE, and optionally one or more additives may be melt blended in any order via one or more extruders to form a uniform sealant composition. In the alternative, the LDPE, LLDPE, and optionally one or more additives may be dry blended in any order, and subsequently extruded to form a film.

## End-Use Applications of the Sealant Composition

The sealant compositions according to the present invention may be used in any sealing applications, for example, food and specialty packaging applications.

In one embodiment, the instant invention provides a sealing layer comprising a sealant composition comprising a linear low density polyethylene composition suitable for sealant applications comprising less than or equal to 100 percent by weight of the units derived from ethylene; and less than 35 percent by weight of units derived from one or more $\alpha$-olefin comonomers; wherein said linear low density polyethylene composition has a density in the range of 0.900 to 0.920 g/cm$^3$, a molecular weight distribution ($M_w/M_n$) in the range of 2.5 to 4.5, a melt index ($I_2$) in the range of 0.5 to 1.8g/10 minutes, a molecular weight distribution ($M_z/M_w$) in the range of from 2.2 to 3, vinyl unsaturation of less than 0.1 vinyls per one thousand carbon atoms present in the backbone of said composition, and a zero shear viscosity ratio (ZSVR) in the range from 1.0 to 1.2; and optionally a low density polyethylene composition having a has a density in the range of 0.915 to 0.930 g/cm$^3$, a melt index ($I_2$) in the range of 0.1 to 5 g/10 minutes, and a molecular weight distribution ($M_w/M_n$) in the range of 6 to 10.

In another alternative embodiment, the instant invention provides an article comprising:

(1) at least one sealing layer comprising a sealant composition comprising a linear low density polyethylene composition suitable for sealant applications comprising less than or equal to 100 percent by weight of the units derived from ethylene; and less than 35 percent by weight of units derived from one or more $\alpha$-olefin comonomers; wherein said linear low density polyethylene composition has a density in the range of 0.900 to 0.920 g/cm$^3$, a molecular weight distribution ($M_w/M_n$) in the range of 2.5 to 4.5, a melt index ($I_2$) in the range of 0.5 to 1.8g/10 minutes, a molecular weight distribution ($M_z/M_w$) in the range of from 2.2 to 3, vinyl unsaturation of less than 0.1 vinyls per one thousand carbon atoms present in the backbone of said composition, and a zero shear viscosity ratio (ZSVR) in the range from 1.0 to 1.2; and optionally a low density polyethylene composition having a has a density in the range of 0.915 to 0.930 g/cm$^3$, a melt index ($I_2$) in the range of 0.1 to 5 g/10 minutes, and a molecular weight distribution ($M_w/M_n$) in the range of 6 to 10.

In another alternative embodiment, the instant invention provides a method for forming an article comprising the steps of: (1) selecting a sealant composition sealant composition comprising a linear low density polyethylene composition suitable for sealant applications comprising less than or equal to 100 percent by weight of the units derived from ethylene; and less than 35 percent by weight of units derived from one or more $\alpha$-olefin comonomers; wherein said linear low density polyethylene composition has a density in the range of 0.900 to 0.920 g/cm$^3$, a molecular weight distribution ($M_w/M_n$) in the range of 2.5 to 4.5, a melt index ($I_2$) in the range of 0.5 to 1.8g/10 minutes, a molecular weight distribution ($M_z/M_w$) in the range of from 2.2 to 3, vinyl unsaturation of less than 0.1 vinyls per one thousand carbon atoms present in the backbone of said composition, and a zero shear viscosity ratio (ZSVR) in the range from 1.0 to 1.2; and optionally a low density polyethylene composition having a has a density in the range of 0.915 to 0.930 g/cm$^3$, a melt index ($I_2$) in the range of 0.1 to 5 g/10 minutes, and a molecular weight distribution ($M_w/M_n$) in the range of 6 to 10; (2) selecting at least one substrate layer; (3) applying said sealant composition to at least one surface of said at least one substrate layer; (4) thereby forming at least one sealant layer associated with at least one surface of said at least one substrate layer.

The sealant compositions of the present invention have shown to improve hot tack performance, including increased hot tack strength, lower hot tack initiation temperatures, and broadening of the hot tack window.

The sealant compositions of the present invention can be used in various packaging, for example food packaging applications.

## Examples

The following examples illustrate the present invention but are not intended to limit the scope of the invention. The examples of the instant invention demonstrate sealant compositions of the present invention have shown to improve hot tack performance, including increased hot tack strength, lower hot tack initiation temperatures, and broadening of the hot tack window.

## Inventive Sealant Composition 1

Inventive sealant composition 1 is an ethylene-hexene interpolymer, having a density of approximately 0.912 g/cm$^3$, a melt index ($I_2$), measured at 190° C. and 2.16 kg, of approximately 1.02 g/10 minutes, a melt flow ratio ($I_{21}/I_2$) of approximately 26.5. Additional properties of inventive sealant composition 1 were measured, and are reported in Table 1.

Inventive sealant composition 1 was prepared via gasphase polymerization in a single fluidized bed reactor system according to the polymerization conditions reported in Table 1A in the presence of a hafnium based catalyst system, as described above, represented by the following structure:

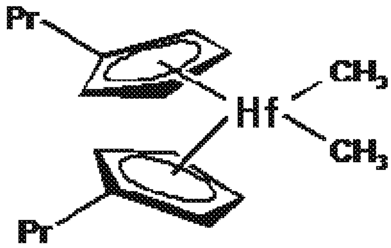

.

## Inventive Sealant Composition 2

Inventive sealant composition 2 is an ethylene-hexene interpolymer, having a density of approximately 0.912 g/cm$^3$, a melt index ($I_2$), measured at 190° C. and 2.16 kg, of approximately 1.04 g/10 minutes, a melt flow ratio ($I_{21}/I_2$) of approximately 21.3. Additional properties of inventive sealant composition 2 were measured, and are reported in Table 1.

Inventive sealant composition 2 was prepared via gasphase polymerization in a single fluidized bed reactor system according to the polymerization conditions reported in Table 1A in the presence of a hafnium based catalyst system, as described above, represented by the following structure:

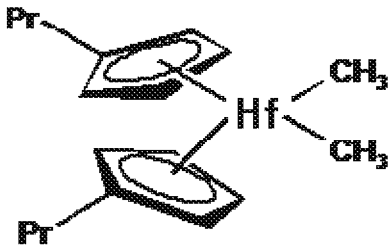

.

## Inventive Sealant Composition 3

Inventive sealant composition 3 is an ethylene-hexene interpolymer, having a density of approximately 0.904 g/cm$^3$, a melt index ($I_2$), measured at 190° C. and 2.16 kg, of approximately 0.95 g/10 minutes, a melt flow ratio ($I_{21}/I_2$) of approximately 30.9. Additional properties of inventive sealant composition 3 were measured, and are reported in Table 1.

Inventive sealant composition 3 was prepared via gasphase polymerization in a single fluidized bed reactor system according to the polymerization conditions reported in Table 1A in the presence of a hafnium based catalyst system, as described above, represented by the following structure:

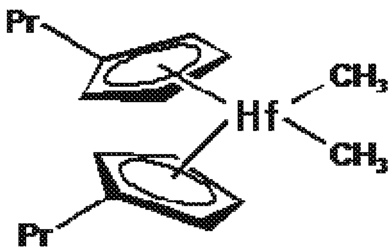

.

## Comparative Sealant Composition A

Comparative sealant composition A is an ethylene-hexene interpolymer, commercially available under the tradename EXCEED 1012CA from EXXONMOBIL Chemical Company, having a density of approximately 0.911 g/cm$^3$,

a melt index ($I_2$), measured at 190° C. and 2.16 kg, of approximately 1.05 g/10 minutes, an melt flow ratio ($I_{21}/I_2$) of approximately 15.9. Additional properties of the comparative sealant composition A were measured, and are reported in Table 1.

**Comparative Sealant Composition B**

Comparative sealant composition B is an ethylene-hexene interpolymer, commercially available under the tradename SCLAIR FP112 from NOVA Chemicals, having a density of approximately 0.912 g/cm$^3$, a melt index ($I_2$), measured at 190° C. and 2.16 kg, of approximately 0.86 g/10 minutes, an melt flow ratio ($I_{21}/I_2$) of approximately 29.8. Additional properties of the comparative sealant composition B were measured, and are reported in Table 1.

**Comparative Sealant Composition C**

Comparative sealant composition C is an ethylene-octene interpolymer, commercially available under the tradename AFFINITY PL1880G from The Dow Chemical Company, having a density of approximately 0.904 g/cm$^3$, a melt index ($I_2$), measured at 190° C. and 2.16 kg, of approximately 1.03 g/10 minutes, an melt flow ratio ($I_{21}/I_2$) of approximately 31.1. Additional properties of the comparative sealant composition C were measured, and are reported in Table 1.

**Inventive Monolayer Films 1-3**

Inventive compositions 1-3 were formed into inventive monolayer films 1-3 according to the following process and process conditions reported in Table 2. Inventive compositions 1-3 were formed into inventive monolayer films 1-3 via blown film process on a Collin blown film line according to the process conditions reported in Table 2. The fabrication apparatus contains three extruders: (1) extruder 1 having a 25mm barrel diameter; (2) extruder 2 having a 30mm barrel diameter, and (3) extruder 3 having a 25mm barrel diameter, each of which can fabricate a film layer. Average total output of all the three extruders, depending on the material, is 10-15 kg/hr. Each extruder has a standard single flight forwarding screw. The die diameter is 60mm. Maximum takeoff speed of the line is 30 m/min. The extrusion conditions are reported in Table 2.

Monolayer films were prepared by extruding the same polymer composition through three parallel extruders. Inventive monolayer films 1-3 were tested for their properties and those properties are listed in Table 3.

**Comparative Monolayer Films A-C**

Comparative compositions A-C were formed into comparative monolayer films A-C according to the following process and process conditions reported in Table 2. Comparative compositions A-C were formed into comparative monolayer films A-C via blown film process on a Collin blown film line according to the process conditions reported in Table 2. The fabrication apparatus contains three extruders: (1) extruder 1 having a 25mm barrel diameter; (2) extruder 2 having a 30mm barrel diameter, and (3) extruder 3 having a 25mm barrel diameter, each of which can fabricate a film layer. Average total output of all the three extruders, depending on the material, is 10-15 kg/hr. Each extruder has a standard single flight forwarding screw. The die diameter is 60mm. Maximum takeoff speed of the line is 30 m/min. The extrusion conditions are reported in Table 2.

Monolayer films were prepared by extruding the same polymer composition through three parallel extruders. Comparative monolayer films A-C were tested for their properties and those properties are listed in Table 3.

**Inventive Three Layer Films 1-3**

Inventive three layer films 1-3 are fabricated via coextrusion process. The fabrication apparatus contains three extruders: (1) extruder 1 having a 25mm barrel diameter; (2) extruder 2 having a 30mm barrel diameter, and (3) extruder 3 having a 25mm barrel diameter, each of which can fabricate a film layer. Average total output of all the three extruders, depending on the material, is 10-15 kg/hr. Each extruder has a standard single flight forwarding screw. The die diameter is 60mm. Maximum takeoff speed of the line is 30 m/min. The extrusion conditions are reported in Table 4.

**Inventive three layer film 1** comprises: (1) 25 percent by weight of a skin layer, based on the total weight of the three layer film, which was fabricated via extruder number 1, comprising Ultramid C33L01; (2) 50 percent by weight of a core layer, based on the total weight of the three layer film, which was fabricated via extruder number 2, comprising 90 percent by weight of ATTANE™ 4201 and 10 percent by weight of AMPLIFY™ GR-205, based on the total weight of the core layer; (3) 25 percent by weight of inventive sealant composition 1, as described above, based on the total weight of the three layer film, which was fabricated via extruder number 3.

**Inventive three layer film 2** comprises: (1) 25 percent by weight of a skin layer, based on the total weight of

the three layer film, which was fabricated via extruder number 1, comprising Ultramid C33L01; (2) 50 percent by weight of a core layer, based on the total weight of the three layer film, which was fabricated via extruder number 2, comprising 90 percent by weight of ATTANE™ 4201 and 10 percent by weight of AMPLIFY™ GR-205, based on the total weight of the core layer; (3) 25 percent by weight of inventive sealant composition 2, as described above, based on the total weight of the three layer film, which was fabricated via extruder number 3.

**Inventive three layer film 3** comprises: (1) 25 percent by weight of a skin layer, based on the total weight of the three layer film, which was fabricated via extruder number 1, comprising Ultramid C33L01; (2) 50 percent by weight of a core layer, based on the total weight of the three layer film, which was fabricated via extruder number 2, comprising 90 percent by weight of ATTANE™ 4201 and 10 percent by weight of AMPLIFY™ GR-205, based on the total weight of the core layer; (3) 25 percent by weight of inventive sealant composition 3, as described above, based on the total weight of the three layer film, which was fabricated via extruder number 3.

Inventive three layer films 1-3 were tested for their sealant properties, and the results are reported in figures 2.

## Comparative Three Layer Films A-C

Comparative three layer films A-C are fabricated via coextrusion process. The fabrication apparatus contains three extruders: (1) extruder 1 having a 25mm barrel diameter; (2) extruder 2 having a 30mm barrel diameter, and (3) extruder 3 having a 25mm barrel diameter, each of which can fabricate a film layer. Average total output of all the three extruders, depending on the material, is 10-15 kg/hr. Each extruder has a standard single flight forwarding screw. The die diameter is 60mm. Maximum takeoff speed of the line is 30 m/min. The extrusion conditions are reported in Table 4.

**Comparative three layer film A** comprises: (1) 25 percent by weight of a skin layer, based on the total weight of the three layer film, which was fabricated via extruder number 1, comprising Ultramid C33L01; (2) 50 percent by weight of a core layer, based on the total weight of the three layer film, which was fabricated via extruder number 2, comprising 90 percent by weight of ATTANE™ 4201 and 10 percent by weight of AMPLIFY™ GR-205, based on the total weight of the core layer; (3) 25 percent by weight of comparative sealant composition A, as described above, based on the total weight of the three layer film, which was fabricated via extruder number 3.

**Comparative three layer film B** comprises: (1) 25 percent by weight of a skin layer, based on the total weight of the three layer film, which was fabricated via extruder number 1, comprising Ultramid C33L01; (2) 50 percent by weight of a core layer, based on the total weight of the three layer film, which was fabricated via extruder number 2, comprising 90 percent by weight of ATTANE™ 4201 and 10 percent by weight of AMPLIFY™ GR-205, based on the total weight of the core layer; (3) 25 percent by weight of comparative sealant composition B, as described above, based on the total weight of the three layer film, which was fabricated via extruder number 3.

**Comparative three layer film C** comprises: (1) 25 percent by weight of a skin layer, based on the total weight of the three layer film, which was fabricated via extruder number 1, comprising Ultramid C33L01; (2) 50 percent by weight of a core layer, based on the total weight of the three layer film, which was fabricated via extruder number 2, comprising 90 percent by weight of ATTANE™ 4201 and 10 percent by weight of AMPLIFY™ GR-205, based on the total weight of the core layer; (3) 25 percent by weight of comparative sealant composition C, as described above, based on the total weight of the three layer film, which was fabricated via extruder number 3.

**Comparative three layer films A-C** were tested for their sealant properties, and the results are reported in figure 2.

Table 1

| Polymer Property | Units | Inventive Composition 1 | Inventive Composition 2 | Inventive Composition 3 | Comparative Composition A | Comparative Composition B | Comparative Composition C |
|---|---|---|---|---|---|---|---|
| Density | $g/cm^3$ | 0.912 | 0.912 | 0.904 | 0.911 | 0.912 | 0.904 |
| $I_2$ | dg/min | 1.02 | 1.04 | 0.95 | 1.05 | 0.86 | 1.03 |
| $I_{10}$ | dg/min | 7.30 | 6.78 | 7.36 | 5.91 | 6.89 | 9.70 |
| $I_{21}$ | dg/min | 27.05 | 22.19 | 29.47 | 16.68 | 25.74 | 32.13 |
| Viscosity (0.1 rad/s) | Pa.s | 7213 | 6632 | 7645 | 6212 | 10218 | 11386 |
| Viscosity (100 rad/s) | Pa.s | 1687 | 1880 | 1582 | 2271 | 1676 | 1570 |
| Tan Delta (0.1 rad/s) | | 26.8 | 38.8 | 25.0 | 42.5 | 7.7 | 5.1 |
| Melt Strength | cN | 2.75 | 2.50 | 3.00 | 2.50 | 3.50 | 3.50 |
| $M_n$ | g/mol | 34,130 | 38,488 | 31,676 | 49,405 | 28,709 | 42,885 |
| $M_w$ | g/mol | 117,819 | 114,849 | 121,178 | 113,372 | 125,521 | 89,640 |
| $M_z$ | g/mol | 273,751 | 251,284 | 287,782 | 201,450 | 394,450 | 161,579 |
| $M_w/M_n$ | | 3.45 | 2.98 | 3.83 | 2.30 | 4.37 | 2.09 |
| $M_z/M_w$ | | 2.32 | 2.19 | 2.37 | 1.78 | 3.14 | 1.8 |
| ZSVR | | 1.1 | 1.1 | 1.0 | 1.1 | 1.3 | 5.0 |
| Vinyls (FT-IR) | /1000 C | 0.06 | 0.057 | 0.028 | 0.02 | 0.384 | 0.184 |

**Table 1A**

| | Inventive Example 1 | Inventive Example 2 | Inventive Example 3 |
|---|---|---|---|
| Reactor Pressure (MPa) ((psi)) | 2.44 (348) | 2.44 (348) | 2.44 (348) |
| Bed Temperature (°C) | 75 | 80 | 70 |
| $C_2$ Partial Pressure (MPa) ((psi)) | 1.33 (190) | 1.33 (190) | 1.33 (190) |
| $C_6/C_2$ Molar Ratio | 0.0162 | 0.0153 | 0.0189 |
| $C_6/C_2$ Flow Ratio (kg/kg) ((lb/lb)) | 0.0431 (0.0950) | 0.0400 (0.0880) | 0.0594 (0.1310) |
| $H_2$ ppm / $C_2$ mol % | 6.48 | 6.51 | 8.04 |
| $H_2$ PPM | 338 | 345 | 419 |
| Isopentane (mol %) | 7.47 | 7.58 | 5.00 |
| Reactor Residence Time (hr) | 2.64 | 2.41 | 2.34 |

**Table 2**

| Film Fabrication | Units | Inventive Film 1 | Inventive Film 2 | Inventive Film 3 | Comparative Film A | Comparative Film B | Comparative Film C |
|---|---|---|---|---|---|---|---|
| **BUR** | | 2.5 | 2.5 | 2.5 | 2.5 | 2.5 | 2.5 |
| **Blower** | % | 77 | 70 | 75 | 75 | 75 | 77 |
| **Die Gap** | mm | 2 | 2 | 2 | 2 | 2 | 2 |
| **Extruder -A Melt Temperature** | °C | 200 | 195 | 254 | 392 | 399 | 195 |
| **Extruder -A Motor Current** | A | 4.3 | 4.5 | 4.6 | 5.2 | 4.1 | 4.5 |
| **Extruder -A Pressure** | MPa (bar) | 28.2 (282) | 29.1 (291) | 29.4 (294) | 33.3 (333) | 28.0 (280) | 22.9 (229) |
| **Extruder -A Throughput** | kg/hr | 3.5 | 3.4 | 3.6 | 3.5 | 3.4 | 3.6 |
| **Extruder -A Throughput** | rpms | 80 | 80 | 80 | 80 | 80 | 80 |
| **Extruder -B Melt Temperature** | °C | 192 | 194 | 194 | 195 | 192 | 194 |
| **Extruder -B Motor Current** | A | 4.8 | 5.3 | 4.9 | 5.3 | 4.3 | 4.8 |
| **Extruder -B Pressure** | MPa (bar) | 27.4 (274) | 29.3 (293) | 27.7 (277) | 31.4 (314) | 27.2 (272) | 21.9 (219) |
| **Extruder -B Throughput** | kg/hr | 3.6 | 3.7 | 3.6 | 3.6 | 3.4 | 3.6 |
| **Extruder -B Throughput** | rpms | 80 | 80 | 80 | 80 | 80 | 80 |
| **Extruder -C Melt Temperature** | °C | 189 | 189 | 192 | 187 | 188 | 192 |
| **Extruder -C Motor Current** | A | 6.3 | 6.7 | 6.4 | 6.8 | 5.8 | 5.7 |
| **Extruder -C Pressure** | MPa (bar) | 29.1 (291) | 30.9 (309) | 28.9 (289) | 33.3 (333) | 29.2 (292) | 23.4 (234) |
| **Extruder-C Throughput** | kg/hr | 3.5 | 3.3 | 3.4 | 3.4 | 3.4 | 3.5 |
| **Extruder-C Throughput** | rpms | 40 | 40 | 40 | 40 | 40 | 40 |
| **Frostline** | cm (inch) | 12.7 (5) | 14.0 (5.5) | 14.0 (5.5) | 12.7 (5) | 12.7 (5) | 12.7 (5) |
| **Layflat** | cm | 24.00 | 23.25 | 23.50 | 23.75 | 23.75 | 24.00 |
| **Takeoff** | m/min | 15.3 | 15.5 | 15.5 | 15.3 | 15.3 | 15.3 |
| **Thickness** | µm (mil) | 25.9 (1.02) | 25.9 (1.02) | 27.2 (1.07) | 26.2 (1.03) | 23.1 (0.91) | 26.4 (1.04) |
| **Total Throughput** | kg/hr | 10.6 | 10.4 | 10.6 | 10.5 | 10.2 | 10.6 |

Table 3

| Film Properties | Units | Inventive Film 1 | Inventive Film 2 | Inventive Film 3 | Comparative Film A | Comparative Film B | Comparative Film C |
|---|---|---|---|---|---|---|---|
| Dart Impact-Method B | g | 444 | 380 | 552 | 380 | 424 | 380 |
| Puncture Strength | $kJ/m^3$ ($ft*lbf/in^3$) | 970 (461) | 881 (419) | 696 (331) | 864 (411) | 766 (364) | 740 (352) |
| Secant Modulus - CD (1%) | MPa (psi) | 138 (19639) | 143 (20416) | 100 (14210) | 106 (15116) | 125 (17786) | 100 (14289) |
| Secant Modulus - CD (2%) | MPa (psi) | 118 (16782) | 128 (18293) | 87 (12442) | 96 (13702) | 110 (15647) | 90 (12778) |
| Secant Modulus - MD (1%) | MPa (psi) | 161 (23036) | 144 (20558) | 96 (13728) | 113 (16199) | 113 (16149) | 87 (12364) |
| Secant Modulus - MD (2%) | MPa (psi) | 133 (19005) | 132 (18874) | 88 (12547) | 103 (14639) | 100 (14266) | 81 (11601) |
| Tear: Elmendorf - CD | g/μm (g/mil) | 12.1 (309) | 13.5 (346) | 10.4 (267) | 10.3 (263) | 19.2 (493) | 15.4 (394) |
| Tear: Elmendorf - MD | g/μm (g/mil) | 9.13 (234) | 10.4 (267) | 7.06 (181) | 6.98 (179) | 11.1 (284) | 8.66 (222) |

Table 4

| Film Fabrication | Units | Inventive Film 1 | Inventive Film 2 | Inventive Film 3 | Comparative Film A | Comparative Film B | Comparative Film C |
|---|---|---|---|---|---|---|---|
| **BUR** | | 2.5 | 2.5 | 2.5 | 2.5 | 2.5 | 2.5 |
| **Blower** | % | 67 | 72 | 67 | 67 | 67 | 67 |
| **Die Gap** | mm | 2 | 2 | 2 | 2 | 2 | 2 |
| **Extruder-A Melt Temperature** | °C | 224 | 224 | 224 | 224 | 224 | 224 |
| **Extruder-A Motor Current** | A | 1.7 | 1.7 | 1.6 | 1.4 | 1.7 | 1.4 |
| **Extruder-A Pressure** | MPa (bar) | 7.9(79) | 9.0 (90) | 8.5 (85) | 8.7 (87) | 9.3 (93) | 8.4 (84) |
| **Extruder-A Throughput** | kg/hr | 3.2 | 2.9 | 3.3 | 2.9 | 2.9 | 3.1 |
| **Extruder-A Throughput** | rpms | 59 | 60 | 61 | 58 | 59 | 59 |
| **Extruder-B Melt Temperature** | °C | 191 | 192 | 191 | 193 | 192 | 190 |
| **Extruder-B Motor Current** | A | 2.8 | 4.7 | 4.3 | 4.9 | 3.9 | 4 |
| **Extruder-B Pressure** | MPa (bar) | 10.2 (102) | 24.2 (242) | 22.9 (229) | 25.7 (257) | 23.1 (231) | 18.6 (186) |
| **Extruder-B Throughput** | kg/hr | 3.0 | 3.0 | 3.0 | 3.0 | 2.9 | 3.0 |
| **Extruder-B Throughput** | rpms | 65 | 67 | 65 | 65 | 66 | 66 |
| **Extruder-C Melt Temperature** | °C | 191 | 196 | 193 | 194 | 193 | 194 |
| **Extruder-C Motor Current** | A | 6.5 | 6.4 | 6.4 | 6.4 | 6.3 | 6.6 |
| **Extruder-C Pressure** | MPa (bar) | 31.9 (319) | 33.0 (330) | 32.4 (324) | 32.1 (321) | 31.7 (317) | 32.6 (326) |
| **Extruder-C Throughput** | kg/hr | 6.2 | 6 | 6 | 6 | 6 | 5.9 |
| **Extruder-C Throughput** | rpms | 72 | 72 | 72 | 73 | 72 | 72 |
| **Frostline** | Cm (inch) | 15.2 & 24.1 (6 & 9.5) | 12.7 & 20.3 (5 & 8) | 15.2 & 22.9 (6 & 9) | 12.7 & 22.9 (5 & 9) | 15.2 & 20.3 (6 & 8) | 15.2 & 25.4 (6 & 10) |
| **Layflat** | cm | 24.00 | 23.25 | 24.00 | 23.75 | 23.75 | 23.75 |

(continued)

| Film Fabrication | Units | Inventive Film 1 | Inventive Film 2 | Inventive Film 3 | Comparative Film A | Comparative Film B | Comparative Film C |
|---|---|---|---|---|---|---|---|
| **Takeoff** | m/min | 5.0 | 5.0 | 5.0 | 4.9 | 4.9 | 5.0 |
| **Thickness** | μm (mil) | 88.9 (3.5) | 88.9 (3.5) | 88.9 (3.5) | 88.9 (3.5) | 88.9 (3.5) | 88.9 (3.5) |
| **Total Throughput** | kg/hr | 12.4 | 11.9 | 12.3 | 11.9 | 11.8 | 12.0 |

## Test Methods

Test methods include the following:

### Melt index

Melt indices ($I_2$ and $I_{21}$) were measured in accordance to ASTM D-1238 at 190°C and at 2.16 kg and 21.6 kg load, respectively. Their values are reported in g/10 min.

### Density

Samples for density measurement were prepared according to ASTM D4703. Measurements were made within one hour of sample pressing using ASTM D792, Method B.

### Dynamic shear rheology

Samples were compression-molded into 3 mm thick x 25 mm diameter circular plaques at 177°C for 5 minutes under 10 MPa pressure in air. The sample was then taken out of the press and placed on the counter to cool.

Constant temperature frequency sweep measurements were performed on an ARES strain controlled rheometer (TA Instruments) equipped with 25 mm parallel plates, under a nitrogen purge. For each measurement, the rheometer was thermally equilibrated for at least 30 minutes prior to zeroing the gap. The sample was placed on the plate and allowed to melt for five minutes at 190°C. The plates were then closed to 2 mm, the sample trimmed, and then the test was started. The method has an additional five minute delay built in, to allow for temperature equilibrium. The experiments were performed at 190°C over a frequency range of 0.1-100 rad/s at five points per decade interval. The strain amplitude was constant at 10%. The stress response was analyzed in terms of amplitude and phase, from which the storage modulus (G'), loss modulus (G"), complex modulus (G*), dynamic viscosity ($\eta$*), and tan ($\delta$) or tan delta were calculated.

### Melt Strength

Melt strength measurements are conducted on a Gottfert Rheotens 71.97 (Göettfert Inc.; Rock Hill, SC) attached to a Gottfert Rheotester 2000 capillary rheometer. A polymer melt is extruded through a capillary die with a flat entrance angle (180 degrees) with a capillary diameter of 2.0 mm and an aspect ratio (capillary length/capillary diameter) of 15.

After equilibrating the samples at 190 °C for 10 minutes, the piston is run at a constant piston speed of 0.265 mm/second. The standard test temperature is 190 °C. The sample is drawn uniaxially to a set of accelerating nips located 100 mm below the die with an acceleration of 2.4 mm/second$^2$. The tensile force is recorded as a function of the take-up speed of the nip rolls. Melt strength is reported as the plateau force (cN) before the strand broke. The following conditions are used in the melt strength measurements: Plunger speed = 0.265 mm/second; wheel acceleration = 2.4 mm/s$^2$; capillary diameter = 2.0 mm; capillary length = 30 mm; and barrel diameter = 12 mm.

### High Temperature Gel Permeation Chromatography

The Gel Permeation Chromatography (GPC) system consists of a Waters (Milford, Mass) 150C high temperature chromatograph (other suitable high temperatures GPC instruments include Polymer Laboratories (Shropshire, UK) Model 210 and Model 220) equipped with an on-board differential refractometer (RI) (other suitable concentration detectors can include an IR4 infra-red detector from Polymer ChAR (Valencia, Spain)). Data collection is performed using Viscotek TriSEC software, Version 3, and a 4-channel Viscotek Data Manager DM400. The system is also equipped with an on-line solvent degassing device from Polymer Laboratories (Shropshire, United Kingdom).

Suitable high temperature GPC columns can be used such as four 30 cm long Shodex HT803 13 $\mu$m (micron) columns or four 30 cm Polymer Labs columns of 20-micron mixed-pore-size packing (MixA LS, Polymer Labs). The sample carousel compartment is operated at 140 °C and the column compartment is operated at 150 °C. The samples are prepared at a concentration of 0.1 grams of polymer in 50 milliliters of solvent. The chromatographic solvent and the sample preparation solvent contain 200 ppm of trichlorobenzene (TCB). Both solvents are sparged with nitrogen. The polyethylene samples are gently stirred at 160 °C for four hours. The injection volume is 200 microliters. The flow rate through the GPC is set at 1 ml/minute.

The GPC column set is calibrated by running 21 narrow molecular weight distribution polystyrene standards. The molecular weight (MW) of the standards ranges from 580 to 8,400,000, and the standards are contained in 6 "cocktail" mixtures. Each standard mixture has at least a decade of separation between individual molecular weights. The standard mixtures are purchased from Polymer Laboratories. The polystyrene standards are prepared at 0.025 g in 50 mL of

solvent for molecular weights equal to or greater than 1,000,000 and 0.05 g in 50 mL of solvent for molecular weights less than 1,000,000. The polystyrene standards were dissolved at 80 °C with gentle agitation for 30 minutes. The narrow standards mixtures are run first and in order of decreasing highest molecular weight component to minimize degradation. The polystyrene standard peak molecular weights are converted to polyethylene molecular weight using the following Equation (as described in Williams and Ward, J. Polym. Sci., Polym. Letters, 6, 621 (1968)):

$$M_{polyethylene} = A \text{ x } (M_{polystyrene})^B,$$

where M is the molecular weight of polyethylene or polystyrene (as marked), and B is equal to 1.0. It is known to those of ordinary skill in the art that A may be in a range of 0.38 to 0.44 and is determined at the time of calibration using a broad polyethylene standard. Use of this polyethylene calibration method to obtain molecular weight values, such as the molecular weight distribution (MWD or $M_w/M_n$), and related statistics (generally refers to conventional GPC or cc-GPC results), is defined here as the modified method of Williams and Ward.

**Creep Zero Shear Viscosity Measurement Method**

Zero-shear viscosities are obtained via creep tests that were conducted on an AR-G2 stress controlled rheometer (TA Instruments; New Castle, Del) using 25-mm-diameter parallel plates at 190° C. The rheometer oven is set to test temperature for at least 30 minutes prior to zeroing fixtures. At the testing temperature a compression molded sample disk is inserted between the plates and allowed to come to equilibrium for 5 minutes. The upper plate is then lowered down to 50 μm above the desired testing gap (1.5 mm). Any superfluous material is trimmed off and the upper plate is lowered to the desired gap. Measurements are done under nitrogen purging at a flow rate of 5 L/min. Default creep time is set for 2 hours.

A constant low shear stress of 20 Pa is applied for all of the samples to ensure that the steady state shear rate is low enough to be in the Newtonian region. The resulting steady state shear rates are in the range of $10^{-3}$ to $10^{-4}$ $s^{-1}$ for the samples in this study. Steady state is determined by taking a linear regression for all the data in the last 10% time window of the plot of log (J(t)) vs. log(t), where J(t) is creep compliance and t is creep time. If the slope of the linear regression is greater than 0.97, steady state is considered to be reached, then the creep test is stopped. In all cases in this study the slope meets the criterion within 2 hours. The steady state shear rate is determined from the slope of the linear regression of all of the data points in the last 10% time window of the plot of ε vs. t, where ε is strain. The zero-shear viscosity is determined from the ratio of the applied stress to the steady state shear rate.

In order to determine if the sample is degraded during the creep test, a small amplitude oscillatory shear test is conducted before and after the creep test on the same specimen from 0.1 to 100 rad/s. The complex viscosity values of the two tests are compared. If the difference of the viscosity values at 0.1 rad/s is greater than 5%, the sample is considered to have degraded during the creep test, and the result is discarded.

**Zero-Shear Viscosity Ratio** (ZSVR) is defined as the ratio of the zero-shear viscosity (ZSV) of the branched polyethylene material to the ZSV of the linear polyethylene material at the equivalent weight average molecular weight (Mw-gpc) according to the following Equation:

$$ZSVR = \frac{\eta_{0B}}{\eta_{0L}} = \frac{\eta_{0B}}{2.29^{-15} M_{w-gpc}^{3.65}}$$

The ZSV value is obtained from creep test at 190°C via the method described above. The Mw-gpc value is determined by the conventional GPC method. The correlation between ZSV of linear polyethylene and its Mw-gpc was established based on a series of linear polyethylene reference materials. A description for the ZSV-Mw relationship can be found in the ANTEC proceeding: Karjala, Teresa P.; Sammler, Robert L.; Mangnus, Marc A.; Hazlitt, Lonnie G.; Johnson, Mark S.; Hagen, Charles M., Jr.; Huang, Joe W. L.; Reichek, Kenneth N. Detection of low levels of long-chain branching in polyolefins. Annual Technical Conference - Society of Plastics Engineers (2008), 66th 887-891.

**Vinyl unsaturation**

Vinyl unsaturation level is determined by a FT-IR (Nicolet 6700) in accordance with ASTM D6248 - 98.

## $^{13}C$ NMR

The samples were prepared by adding approximately 2.7g of a 50/50 mixture of tetrachloroethane-$d_2$/orthodichlorobenzene containing 0.025 M Cr(AcAc)3 to 0.4g sample in a Norell 1001-7 10mm NMR tube, and then purging in a N2 box for 2 hours. The samples were dissolved and homogenized by heating the tube and its contents to 150°C using a heating block and heat gun. Each sample was visually inspected to ensure homogeneity. The data were collected using a Bruker 400 MHz spectrometer equipped with a Bruker Dual DUL high-temperature CryoProbe. The data were acquired at 57-80 hours per data file, a 7.3 sec pulse repetition delay (6 sec delay + 1.3 sec acquisition time), 90 degree flip angles, and inverse gated decoupling with a sample temperature of 120°C. All measurements were made on non spinning samples in locked mode. Samples were homogenized immediately prior to insertion into the heated (125°C) NMR Sample changer, and were allowed to thermally equilibrate in the probe for 7 minutes prior to data acquisition. The branch number was calculated from the integral of the peak region at 32.7 ppm and its relative ratio of the peak of neat LDPE.

## Film Testing Conditions

The following physical properties are measured on the films produced:

- **MD and CD Elmendorf Tear Strength:** ASTM D-1922.
- **Dart Impact Strength:** ASTM D-1709, Method A.
- **Secant Modulus:** ASTM D-882.
- **Puncture Strength:** Puncture strength is measured on a Instron Model 4201 with Sintech Testworks Software Version 3.10. The specimen size is 15.2 x 15.2 cm (6" x 6") and 4 measurements are made to determine an average puncture value. The film is conditioned for 40 hours after film production and at least 24 hours in an ASTM controlled laboratory. A 45 kg (100 lb) load cell is used with a round specimen holder 31.9 cm (12.56") square. The puncture probe is a 1.3 cm (½") diameter polished stainless steel ball with a 19.1 cm (7.5") maximum travel length. There is no gauge length; the probe is as close as possible to, but not touching, the specimen. The crosshead speed used is 2.5 cm (10")/minute. The thickness is measured in the middle of the specimen. The thickness of the film, the distance the crosshead traveled, and the peak load are used to determine the puncture by the software. The puncture probe is cleaned using a "Kim-wipe" after each specimen.

• **Hot Tack**

Hot tack measurements on the film are performed using an Enepay commercial testing machines according to ASTM F-1921 (Method B). Prior to testing the samples are conditioned for a minimum of 40hrs at 23°C and 50% R.H. per ASTM D-618 (Procedure A). The hot tack test simulates the filling of material into a pouch or bag before the seal has had a chance to cool completely.

Sheets of dimensions 21.6 cm (8.5") by 35.6 cm (14") are cut from the film, with the longest dimension in the machine direction. Strips 2.5 cm (1") wide and 35.6 cm (14") long are cut from the film [samples need only be of sufficient length for clamping]. Tests are performed on these samples over a range of temperatures and the results reported as the maximum load as a function of temperature. Typical temperature steps are 5°C or 10°C with 6 replicates performed at each temperature. The parameters used in the test are as follows:

Specimen Width: 25.4 mm (1.0 in)
Sealing Pressure: 0.275 N/$mm^2$
Sealing Dwell Time: 0.5 s
Delay time: 0.1 s
Peel speed: 200 mm/s

The Enepay machines make 1.3 cm (0.5 inch) seals. The data are reported as a hot tack curve where Average Hot Tack Force (N) is plotted as a function of Temperature, as for example shown in Fig. 23. The Hot Tack Initiation temperature is the temperature required to achieve a pre-defined Minimum Hot Tack Force. This force is typically in the 1-2N range, but will vary depending on the specific application. The ultimate Hot Tack

Strength is the peak in the hot tack curve. The Hot Tack Range is the range in temperature at which the seal strength exceeds the Minimum Hot Tack Force.

## Claims

1. A linear low density polyethylene composition suitable for sealant applications comprising:

   less than or equal to 100 percent by weight of the units derived from ethylene;
   less than 35 percent by weight of units derived from one or more $\alpha$-olefin comonomers;
   wherein said linear low density polyethylene composition has a density in the range of 0.900 to 0.920 g/cm$^3$, a molecular weight distribution ($M_w/M_n$) in the range of 2.5 to 4.5, a melt index ($I_2$) in the range of 0.5 to 1.8g/10 minutes, a molecular weight distribution ($M_z/M_w$) in the range of from 2.2 to 3, vinyl unsaturation of less than 0.1 vinyls per one thousand carbon atoms present in the backbone of said composition, and a zero shear viscosity ratio (ZSVR) in the range from 1.0 to 1.2.

2. A sealant composition comprising:

   a linear low density polyethylene composition suitable for sealant applications comprising:

      less than or equal to 100 percent by weight of the units derived from ethylene;
      less than 35 percent by weight of units derived from one or more $\alpha$-olefin comonomers;
      wherein said linear low density polyethylene composition has a density in the range of 0.900 to 0.920 g/cm$^3$, a molecular weight distribution ($M_w/M_n$) in the range of 2.5 to 4.5, a melt index ($I_2$) in the range of 0.5 to 1.8g/10 minutes, a molecular weight distribution ($M_z/M_w$) in the range in the range of from 2.2 to 3, vinyl unsaturation of less than 0.1 vinyls per one thousand carbon atoms present in the backbone of said composition, and a zero shear viscosity ratio (ZSVR) in the range from 1.0 to 1.2;
      from less than 30 percent by weight of a low density polyethylene composition having a density in the range of 0.915 to 0.930 g/cm$^3$, a melt index ($I_2$) in the range of 0.1 to 5 g/10 minutes, and a molecular weight distribution ($M_w/M_n$) in the range of 6 to 10.

3. A film layer comprising the linear low density polyethylene composition of 1.

4. A film layer comprising the sealant composition of claim 2.

5. A multilayer structure comprising the film layer of claim 3 or 4.

## Patentansprüche

1. Eine lineare Polyethylenzusammensetzung niederer Dichte, die für Dichtungsmittelanwendungen geeignet ist, beinhaltend:

   weniger als oder gleich 100 Gewichtsprozent der von Ethylen abgeleiteten Einheiten;
   weniger als 35 Gewichtsprozent von von einem oder mehreren $\alpha$-Olefincomonomeren abgeleiteten Einheiten;
   wobei die lineare Polyethylenzusammensetzung niederer Dichte eine Dichte in dem Bereich von 0,900 bis 0,920 g/cm$^3$, eine Molekulargewichtsverteilung ($M_w/M_n$) in dem Bereich von 2,5 bis 4,5, einen Schmelzindex ($I_2$) in dem Bereich von 0,5 bis 1,8 g/10 Minuten, eine Molekulargewichtsverteilung ($M_z/M_w$) in dem Bereich von 2,2 bis 3, Vinyl-Ungesättigtheit von weniger als 0,1 Vinyl pro tausend Kohlenstoffatomen, die in der Hauptkette der Zusammensetzung vorhanden sind, und ein Nullviskositäts-Verhältnis (ZSVR = Zero Shear Viscosity Ratio) in dem Bereich von 1,0 bis 1,2 aufweist.

2. Eine Dichtungsmittelzusammensetzung, beinhaltend:

   eine lineare Polyethylenzusammensetzung niederer Dichte, die für Dichtungsmittelanwendungen geeignet ist, beinhaltend:

      weniger als oder gleich 100 Gewichtsprozent der von Ethylen abgeleiteten Einheiten;
      weniger als 35 Gewichtsprozent von von einem oder mehreren $\alpha$-Olefincomonomeren abgeleiteten Einheiten;
      wobei die lineare Polyethylenzusammensetzung niederer Dichte eine Dichte in dem Bereich von 0,900 bis 0,920 g/cm$^3$, eine Molekulargewichtsverteilung ($M_w/M_n$) in dem Bereich von 2,5 bis 4,5, einen Schmelzindex

($I_2$) in dem Bereich von 0,5 bis 1,8 g/10 Minuten, eine Molekulargewichtsverteilung ($M_z/M_w$) in dem Bereich von 2,2 bis 3, Vinyl-Ungesättigtheit von weniger als 0,1 Vinyl pro tausend Kohlenstoffatomen, die in der Hauptkette der Zusammensetzung vorhanden sind, und ein Nullviskositäts-Verhältnis (ZSVR = Zero Shear Viscosity Ratio) in dem Bereich von 1,0 bis 1,2 aufweist;
zu weniger als 30 Gewichtsprozent eine Polyethylenzusammensetzung niederer Dichte mit einer Dichte in dem Bereich von 0,951 bis 0,930 g/cm$^3$, einem Schmelzindex ($I_2$) in dem Bereich von 0,1 bis 5 g/10 Minuten und einer Molekulargewichtsverteilung ($M_w/M_n$) in dem Bereich von 6 bis 10.

**3.** Eine Filmschicht, beinhaltend die lineare Polyethylenzusammensetzung niederer Dichte gemäß 1.

**4.** Eine Filmschicht, beinhaltend die Dichtungsmittelzusammensetzung gemäß Anspruch 2.

**5.** Eine mehrschichtige Struktur, beinhaltend die Filmschicht gemäß Anspruch 3 oder 4.

## Revendications

**1.** Une composition de polyéthylène à basse densité linéaire qui convient pour des applications en tant que produit d'étanchéité comprenant :

moins de ou une quantité égale à 100 pour cent en poids des unités dérivées de l'éthylène ;
moins de 35 pour cent en poids d'unités dérivées d'un ou de plusieurs comonomères $\alpha$-oléfine ;
ladite composition de polyéthylène à basse densité linéaire ayant une masse volumique comprise dans la gamme allant de 0,900 à 0,920 g/cm$^3$, une distribution des masses moléculaires ($M_w/M_n$) comprise dans la gamme allant de 2,5 à 4,5, un indice de fluidité à chaud ($I_2$) compris dans la gamme allant de 0,5 à 1,8 g/10 minutes, une distribution des masses moléculaires ($M_z/M_w$) comprise dans la gamme allant de 2,2 à 3, une insaturation vinylique de moins de 0,1 vinyle pour mille atomes de carbone présents dans le squelette de ladite composition, et un rapport de viscosité de cisaillement zéro (ZSVR) compris dans la gamme allant de 1,0 à 1,2.

**2.** Une composition de produit d'étanchéité comprenant :

une composition de polyéthylène à basse densité linéaire qui convient pour des applications en tant que produit d'étanchéité comprenant :

moins de ou une quantité égale à 100 pour cent en poids des unités dérivées de l'éthylène ;
moins de 35 pour cent en poids d'unités dérivées d'un ou de plusieurs comonomères $\alpha$-oléfine ;
ladite composition de polyéthylène à basse densité linéaire ayant une masse volumique comprise dans la gamme allant de 0,900 à 0,920 g/cm$^3$, une distribution des masses moléculaires ($M_w/M_n$) comprise dans la gamme allant de 2,5 à 4,5, un indice de fluidité à chaud ($I_2$) compris dans la gamme allant de 0,5 à 1,8 g/10 minutes, une distribution des masses moléculaires ($M_z/M_w$) comprise dans la gamme allant de 2,2 à 3, une insaturation vinylique de moins de 0,1 vinyle pour mille atomes de carbone présents dans le squelette de ladite composition, et un rapport de viscosité de cisaillement zéro (ZSVR) compris dans la gamme allant de 1,0 à 1,2 ;
de moins de 30 pour cent en poids d'une composition de polyéthylène à basse densité ayant une masse volumique comprise dans la gamme allant de 0,915 à 0,930 g/cm$^3$, un indice de fluidité à chaud ($I_2$) compris dans la gamme allant de 0,1 à 5 g/10 minutes, et une distribution des masses moléculaires ($M_w/M_n$) comprise dans la gamme allant de 6 à 10.

**3.** Une couche de film comprenant la composition de polyéthylène à basse densité linéaire de 1.

**4.** Une couche de film comprenant la composition de produit d'étanchéité de la revendication 2.

**5.** Une structure multicouche comprenant la couche de film de la revendication 3 ou de la revendication 4.

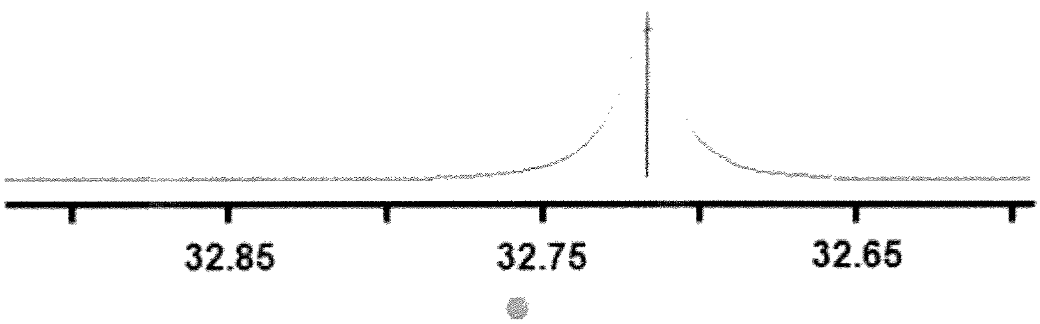


Figure 1

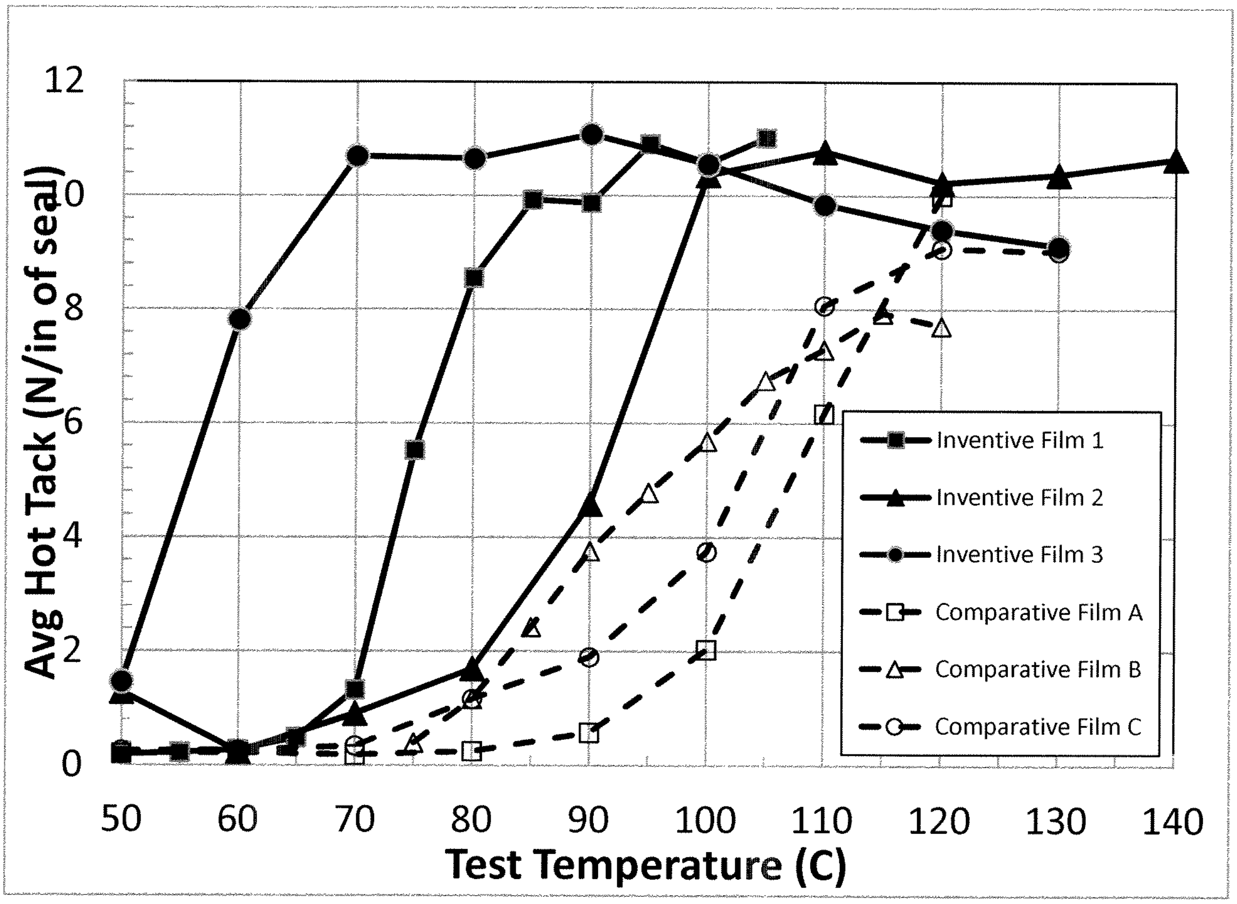
12
10
8
6
4
2
0
Avg Hot Tack (N/in of seal)
50
60
70
80
90
100
110
120
130
140
Test Temperature (C)
Inventive Film 1
Inventive Film 2
Inventive Film 3
Comparative Film A
Comparative Film B
Comparative Film C

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- US 6485662 B
- US 4543399 A
- US 5405922 A
- US 5462999 A
- US 4933149 A
- US 6627713 B
- US 4621952 A
- US 6242545 B
- US 7078467 B

### Non-patent literature cited in the description

- **J. B. P. SOARES ; A. E. HAMIELEC.** *POLYMER REACTION ENGINEERING,* 1995, vol. 3 (2), 131-200
- **WILLIAMS ; WARD.** Polym. Letters. *J. Polym. Sci.,* 1968, vol. 6, 621
- **KARJALA, TERESA P. ; SAMMLER, ROBERT L. ; MANGNUS, MARC A. ; HAZLITT, LONNIE G. ; JOHNSON, MARK S. ; HAGEN, CHARLES M., JR. ; HUANG, JOE W. L. ; REICHEK, KENNETH N.** Detection of low levels of long-chain branching in polyolefins. *Annual Technical Conference - Society of Plastics Engineers,* 2008, 887-891